# EUROPEAN PATENT APPLICATION

(11) **EP 1 760 335 A2**
(43) Date of publication of application: **07.03.2007**
(21) Application number: 06254591.8
(22) Date of filing: 04.09.2006
(51) Int. Cl.: F16B 45/02

(54) **Snap hook**

(30) Priority: 02.09.2005 US 217442
(71) Applicant: Pensafe Inc., Stoney Creek ON L8E 5S1 (CA)
(72) Inventor: Brown, Kevin, Padgate, Warrington WA2 0QX (GB)
(74) Representative: Jeffrey, Philip Michael

(57) **Abstract**

A snap hook 1 having a hook shank 2 and a gate keeper 10. The hook shank 2 includes a main body and a hook member 4 that has a hook bowl 6 and a hook bill 8. The hook bill 8 and the main body define a gateway opening therebetween. The gate keeper 10 has an outer face and has an open position and a closed position. The hook bill 8 ends in a spigot 11 and the gate keeper 10 further includes a generally correspondingly dimensioned receiver 12 such that when the gate keeper 10 is in its closed position the spigot 11 is at least partially received within the receiver 12, with the spigot 11 and the receiver 12 thereby resisting movement of the gate keeper 10 when a force directed in a generally inward direction toward the main body is applied to the outer face of the gate keeper 10.

## Description

This invention relates to snap hooks of the type that may be used on safety belts, safety harnesses, safety lines or any of a wide variety of other applications. In one particular embodiment, the invention relates to a snap hook having a new and improved gate keeper and hook bill design that enhances the ability of the gate keeper to withstand loading in multiple directions.

Snap hooks in the safety and lifting industries take a variety of different forms and have an equally wide number of different applications. One application for snap hooks is in fall arrest systems.

Safety and the prevention of falls is of primary importance for individuals working at heights, around areas of excavation, or where a fall could result in serious injury or death. In such cases the employment of a safety system to prevent falls is often not only desirable but a statutory requirement. Typically, safety systems that are commonly used involve the placement of a harness or belt around an individual and then the subsequent use of a rope, cable or strap that secures the individual to a solid structure. For example, individuals working on bridges, towers or tall buildings will commonly wear belts, safety harnesses or fall arresters that include a lifeline, most typically comprised of a rope or strap having one end secured to a structural feature of the device upon which the individual is working. In the logging industry, and in situations where individuals are working on utility poles, a worker is often fitted with a safety belt having a rope or strap that is connected to the belt at one end, is passed around the tree or pole, and then has its free end connected to the opposite side of the belt. At least one end of the rope or strap is usually fitted with a snap hook to enable it to be readily engaged or disengaged from the safety belt or support structure.

In theory, should a worker slip or fail while wearing a safety belt or a harness that is securely attached by way of a lifeline to a solid structure, the worker will only be allowed to fall a short distance after which his decent will be stopped and he will be suspended until he can regain his balance or be rescued. In practice the safety harness and fall arrest systems currently in use do not always function as designed and accidents, injuries and fatalities sometimes occur. One type of failure that can have disastrous results is a failure of a snap hook on the end of a lifeline.

Due to their convenience and ease of use snap hooks having a gate keeper that encloses the hook bowl are probably the most widely used method to secure the end of a lifeline to an object. Unfortunately, simple snap hooks can become unintentionally opened through the application of a force against the gate keeper. As a result, others have proposed and developed a variety of different locking mechanisms that assist in maintaining the gate keeper in a closed position (for example, see U.S. Patents 4,062,092 dated December 13, 1997; 4,122,585 dated October 31, 1978; 5,257,441 dated November 2, 1993; 5,579,564 dated December 3, 1996; and 5,896,630 dated April 27, 1999.) While such locking mechanisms have reduced the likelihood of an unintentional opening of the hook, they are generally limited in their ability to prevent the gate keeper from becoming dislodged from the end of the hook bowl or bill through the application of forces or loads that may be applied directly to the gate keeper. Such prior hooks are particularly vulnerable to face loads applied to the gate keeper at an angle of approximately 90 degrees to the longitudinal axis of the hook. It has been found that situations as innocuous as leaning against a hook that is bearing against a solid surface can sometimes be sufficient to cause an accidental disengagement of the gate keeper from the hook's bill. In such cases the gate keeper may unintentionally become dislodged and present a significant threat to the safety of personal and equipment.

The preferred embodiment relates to an improved snap hook that provides an increased level of security and that helps to minimize the likelihood of an accidental or unintentional disengagement of the gate keeper from the hook's bill

Accordingly, in one of its aspects the invention provides a snap hook comprising a hook shank including a main body and a hook member, said hook member having a hook bowl and a hook bill, said hook bill and said main body defining a gateway opening therebetween; and, a gate keeper having an outer face, said gate keeper having an open position and a closed position, when in said closed position said gate keeper enclosing said gateway opening, when in said open position said gate keeper allowing passage of an object through said gateway opening, said hook bill ending in a spigot and said gate keeper including a generally correspondingly dimensioned receiver such that when said gate keeper is in said closed position said spigot is at least partially received within said receiver, said spigot and said receiver thereby resisting movement of said gate keeper when a force directed in a generally inward direction toward said main body is applied to said outer face of said gate keeper.

In a further aspect the invention provides a snap hook comprising a hook shank including a main body and a hook member, said hook member having a hook bowl and a hook bill, said hook bill and said main body defining a gateway opening therebetween; a gate keeper having an open position and a closed position, when in said closed position said gate keeper enclosing said gateway opening, when in said open position said gate keeper allowing passage of an object through said gateway opening, said gate keeper including a leading edge, a pair of opposed side portions and an outer face, said leading edge enclosing said gateway opening when said gate keeper is in said closed position, said leading edge, said side portions and said outer face of said gate keeper meeting to form a tip having a receiver formed therein, said hook bill ending in a spigot dimensioned to be at least partially received within said receiver when said gate keeper is in said closed position, said spigot and said receiver resisting movement of said gate keeper when a force is applied to said outer face of said gate keeper in a direction generally inward toward said main body.

Further aspects and advantages of the invention will become apparent from the following description taken together with the accompanying drawings.

Various embodiments of the present invention will now be described, by way of example only, with reference to the accompanying drawings in which:
Figure 1 is a side elevational view of a snap hook constructed in accordance with one of the preferred embodiments of the present invention;

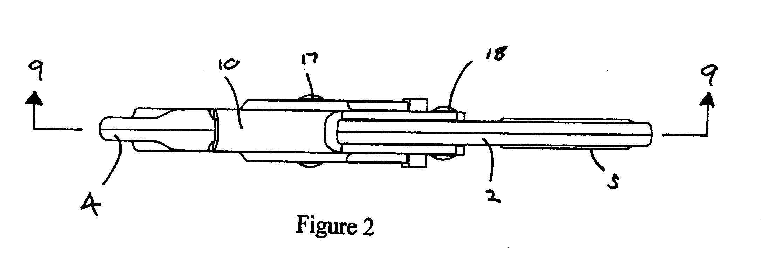

Figure 2 is a top plan view of the snap hook shown in Figure 1;

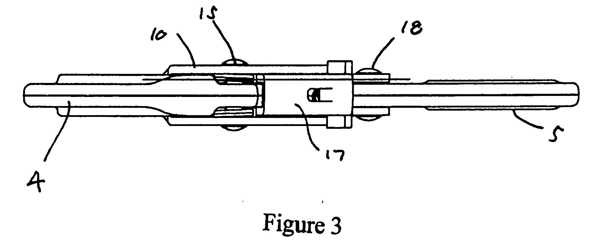

Figure 3 is a bottom view of the snap hook shown in Figure 1;

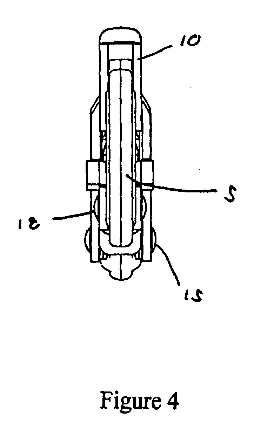

Figure 4 is a right side elevational view of the snap hook shown in Figure 1;

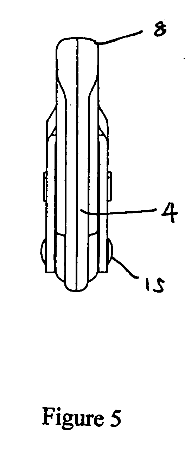

Figure 5 is a left side elevational view of the snap hook shown in Figure 1;
Figure 6 is a side elevational view of the snap hook shown in Figure 1 with its locking lever in an open configuration;
Figure 7 is a side elevational view of the snap hook shown in Figure 1 having both its locking lever and gate keeper in an open configuration;

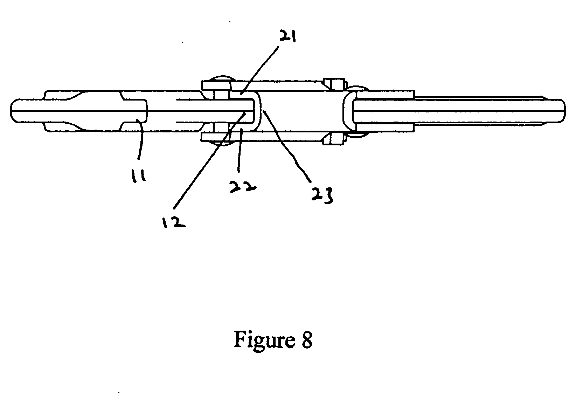

Figure 8 is a top plan view of the snap hook shown in Figure 7;
Figure 9 is a sectional view taken along the line 9 - 9 of Figure 2; and,
Figure 10 is a sectional view taken along the line 10 - 10 of Figure 1.

The present invention may be embodied in a number of different forms. However, the specification and drawings that follow describe and disclose only some of the specific forms of the invention and are not intended to limit the scope of the invention as defined in the claims that follow herein.

A snap hook constructed in accordance with one of the preferred embodiments of the present invention is shown in the attached drawings and represented by reference numeral 1. Snap hook 1 includes a hook shank 2 that is in the form of a main body 3 having a hook member 4 position generally at one of its ends. The opposite end of main body 3 is typically formed with an eye 5 or with a clevis or other means to secure the hook to a rope, cable, belt, chain or other object. In most instances main body 3, hook member 4 and eye 5 will be of unitary construction and formed from a high strength alloy steel or other metal. The structure may also be forged to further increase strength.

In general, hook member 4 is an arched shape and of a relatively standard configuration for snap hooks. Hook member 4 includes a hook bowl 6 and a free end 7 that defines a hook bill 8. The distance or "opening" between hook bill 8 and main body 3 defines a gateway opening that permits hook bowl 6, and hence hook 1, to be secured to a device or object such as an eye bolt, safety cable, lanyard, etc. Hook 1 further includes a gate keeper 10 to enclose gateway opening 9 and to prevent hook 1 from sliding off a cable or other device over which it has been placed. Gate keeper 10 is formed with a pair of opposed side portions 21 and 22, respectively, and an outer face 23. The gate keeper has an open position and a closed position such that when it is in its closed position it extends across the gateway opening and encloses the opening to hook bowl 6. When in its open position gate keeper 8 allows relatively unobstructed passage or entry through gateway opening 9 and into hook bowl 6. As is common in the case of many snap hooks, gate keeper 10 will typically include a spring 20 biasing the gate keeper to its closed position.

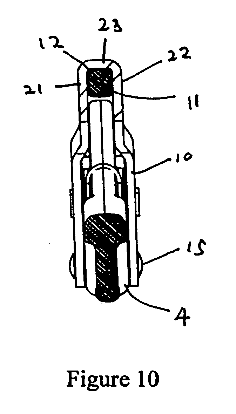

In accordance with the preferred embodiment of the present invention, hook bill 8 includes or ends in a spigot 11 that extends generally outwardly therefrom and that is received at least partially within a generally correspondingly dimensioned receiver 12 formed within the tip 13 of the leading edge 14 of gate keeper 10 when the gate keeper is in its closed position. Spigot 11 may take any one of a wide variety of different physical configurations including rectangular or circular cross-sectional members. In the embodiment shown in the attached drawings the spigot 11 has a generally triangular shaped profile with a somewhat pointed end that helps to facilitate its entry into receiver 12. It is also possible for the spigot and the receiver to be of differing shapes as long as the spigot 11 is at least partially receivable within the receiver when the gate keeper 10 is in its closed position. Regardless of the particular shape of the spigot 11 and the generally correspondingly shaped or dimensioned receiver 12, when the gate keeper 10 is in its closed position the spigot 11 and the receiver 12 resist movement of the gate keeper 10 when a force directed in a generally inward direction toward main body 3 is applied to face 23 of the gate keeper 10. It will also be appreciated that such a structure will resist movement of the gate keeper 10 when it is subjected to side loading. In one embodiment the receiver 12 is constructed in the general form of an open ended sleeve that surrounds the spigot 11 when the spigot 11 is received therein. In an alternate embodiment (see Figure 10) the receiver may surround the spigot on its two side faces and its outer face but not its inner face that is adjacent to hook bowl 6.

From an understanding of the preferred embodiment of the invention it will be appreciated that utilization of a spigot 11 on the end of hook bill 8, together with a corresponding receiver 12 within tip 13 of gate keeper 10, will present a structure having a significantly enhanced ability to resist loading of the gate keeper 10 from various directions. That is, the receipt of the spigot 11 within the receiver 12 when the gate keeper 10 is closed enhances the ability of the gate keeper 10 to resist side and frontal loading, and helps prevent the gate keeper 10 from becoming damaged, bent or otherwise deflected from its normal position when closed. Such a structure significantly enhances the overall strength and structural integrity of hook 1 through helping to ensure that the gate keeper 10 will not unintentionally be forced open by means of forces or loads that may be applied to it during use.

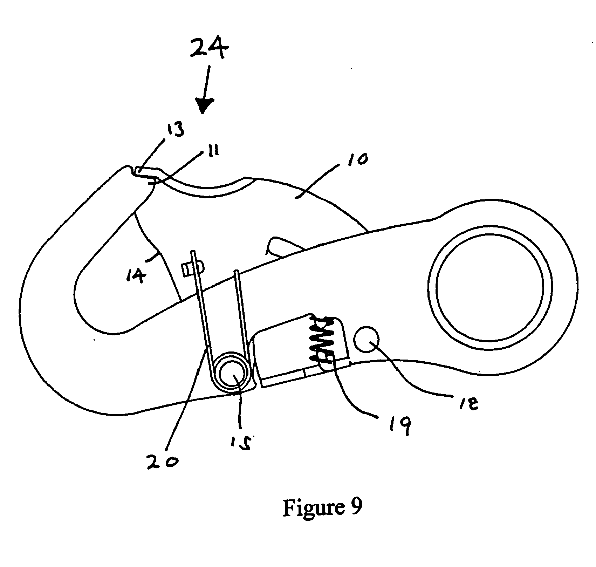

Traditionally gate keepers are secured to the shank of a snap hook through a pivotal connection that allows the gate keeper to rotate between an open and closed position and thereby permit access to the hook bowl. In such instances movement of the gate keeper from its closed to its open position usually requires the application of a force in a direction that is generally perpendicular to the longitudinal axis of the main body of the hook shank. An example of such a snap hook is shown in U.S. patent 5,896,630 dated April 27, 1999. Like traditional snap hooks, gate keeper 10 of the preferred embodiment of the present invention is
pivotally secured to shank 2 through the use of a pin or rivet 15. Spring 20 thus acts to bias gate keeper 10 about pin 15 so that the gate keeper normally remains in its closed
position. However, unlike traditional snap hooks, the gate keeper 10 of the preferred embodiment of the present
invention requires the application of a force in a direction that is generally parallel to the longitudinal axis of spigot 11 in order to move gate keeper 10 from its closed to its open position. That is, with spigot 11 received within receptacle 12, dislodging the gate keeper 10 from its closed position will require the gate keeper 10 to essentially "swing away" from hook bill 8, (ie. moving leading edge 14 away from hook bowl 6) generally requiring the application of a force parallel to the longitudinal axis of the spigot. It will thus be appreciated that unlike traditional snap hooks where the application of a frontal force to the gate keeper tends to move the keeper to its open position, in the case of the preferred embodiment a front force (noted in Figure 9 by arrow 24) applied to the gate keeper 10 effectively drives spigot 11 into contact with receiver 12 and prohibits the opening of the gate keeper 10. Opening the gate keeper 10 requires the application of a force that is distinct from that required to open the keeper on a traditional snap hook. A force must be applied in a manner that allows receiver 12 to be displaced from spigot 11 and that permits the gate keeper 10 to rotate away from hook bowl 6 by pivoting about pin 15. To facilitate the movement of the gate keeper 10 it may include a recess 16 for receiving the thumb or finger of an operator, thereby enhancing the ability to apply an "opening" force.

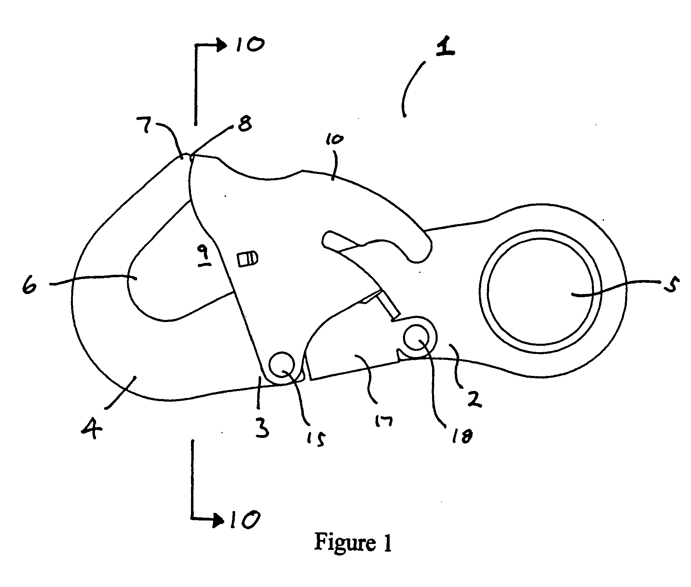

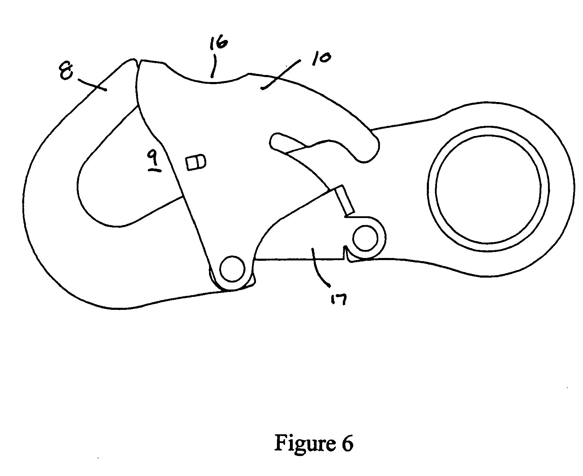

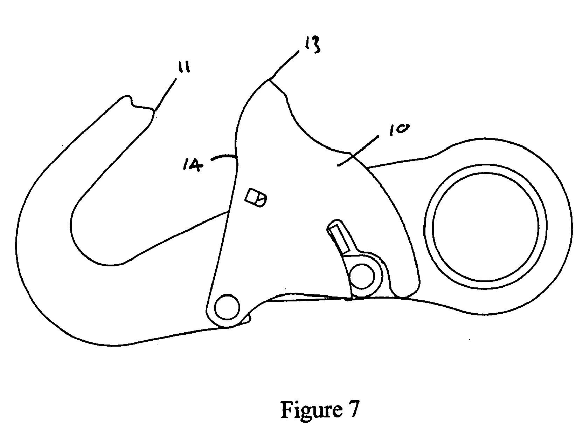

Depending upon the particular application of snap hook 1, it may also be desirable to include a mechanical locking mechanism to prevent the unintended movement of the gate keeper from its closed to its open position. In the embodiment shown in the attached drawings hook 1 includes a locking lever 17 that pivots about an axle or rivet 18 providing it with an engaged and disengaged position. When locking lever 18 is engaged (see Figure 1) it prevents the gate keeper from being opened and retains the gate keeper in its closed position with spigot 11 within receiver 12. When locking lever 18 is in its disengaged position (see Figures 6 and 7) it permits gate keeper 10 to freely pivot about rivet 18 and to thereby move to its open position. As in the case of the gate keeper 10, locking lever 18 preferably includes a spring 19 that normally retains the locking lever in its engaged or locked position.

It is to be understood that what has been described are the preferred embodiments of the invention and that it may be possible to make variations to these embodiments while staying within the broad scope of the invention. Some of these variations have been discussed while others will be readily apparent to those skilled in the art.

## Claims

1. A snap hook comprising:
a hook shank including a main body and a hook member, said hook member having a hook bowl and a hook bill, said hook bill and said main body defining a gateway opening therebetween; and,
a gate keeper having an outer face, said gate keeper having an open position and
a closed position, when in said closed position said gate keeper enclosing said gateway opening, when in said open position said gate keeper allowing passage of an object through said gateway opening,
said hook bill ending in a spigot and said gate keeper including a generally correspondingly dimensioned receiver such that when said gate keeper is in said closed position said spigot is at least partially received within said receiver, said spigot and said receiver thereby resisting movement of said gate keeper when a side load is applied thereto or when a force directed in a generally inward direction toward said main body is applied to said outer face of said gate keeper.

2. The snap hook as claimed in claim 1, wherein movement of said gate keeper from said closed position to said open position requires the application of a force to said gate keeper in a direction that is generally parallel to the longitudinal axis of said spigot.

3. The snap hook as claimed in claim 1 or 2, wherein said receiver completely encompasses said portion of said spigot received therein when said gate keeper is in said closed position.

4. The snap hook as claimed in claim 1, 2 or 3, wherein said spigot has side, outer, and inner faces, said receiver encompassing said side and said outer surfaces of said spigot when said gate keeper is in said closed position.

5. The snap hook as claimed in any preceding claim, wherein said spigot is rectangular in cross section.

6. The snap hook as claimed in any preceding claim, wherein said spigot has a generally pointed end, said generally pointed end of said spigot facilitating entry of said spigot into said receiver.

7. The snap hook as claimed in any preceding claim, including a locking mechanism to resist the unintended movement of said gate keeper from said closed to said open position.

8. The snap hook as claimed in any preceding claim, wherein said gate keeper includes a leading edge, said leading edge enclosing said gateway opening when said gate keeper is in said closed position, movement of said gate keeper from said closed to said open position requiring the movement of said leading edge away from said hook bowl.

9. A snap hook comprising:
a hook shank including a main body and a hook member, said hook member having a hook bowl and a hook bill, said hook bill and said main body defining a gateway opening therebetween;
a gate keeper having an open position and a closed position, when in said closed position said gate keeper enclosing said gateway opening, when in said open position said gate keeper allowing passage of an object through said gateway opening, said gate keeper including a leading edge, a pair of opposed side portions and an outer face, said leading edge, said side portions and said outer face of said gate keeper meeting to form a tip having a receiver formed therein, said hook bill ending in a spigot dimensioned to be at least partially received within said receiver when said gate keeper is in said closed position, said spigot and said receiver resisting movement of said gate keeper when a side load is applied thereto or when a force is applied to said outer face of said gate keeper in a direction generally inward toward said main body.
